# EUROPÄISCHE PATENTANMELDUNG

(11) **EP 1 605 132 A2**
(43) Veröffentlichungstag der Anmeldung: **14.12.2005**
(21) Anmeldenummer: 05007748.6
(22) Anmeldetag: 08.04.2005
(51) Int. Cl.: E06B 9/44, B60J 1/20

(54) **Schutzvorrichtung für einen Fahrzeuginnenraum**

(30) Priorität: 08.06.2004 DE 102004029042
(71) Anmelder: BOS GmbH & Co. KG, 73760 Ostfildern (DE)
(72) Erfinder: Schleef, Thomas, 32457 Porta Westfalica (DE); Häbe, Gunter, 70565 Stuttgart (DE); Wurster, Jürgen, 72213 Altensteig-Berneck (DE)
(74) Vertreter: Patentanwälte Ruff, Wilhelm, Beier, Dauster & Partner

(57) **Zusammenfassung**

2.1. Eine Schutzvorrichtung für einen Fahrzeuginnenraum mit einem flexiblen Flächengebilde, das zwischen einer kompakt abgelegten Ruheposition und einer ausgezogenen Funktionsposition beweglich angeordnet und das endseitig quer zur Ausziehrichtung über seine Breite mit einem formstabilen Profilteil verbunden ist, ist bekannt.
2.2. Erfindungsgemäß weist das Flächengebilde einen über seine Breite erstreckten Flächenabschnitt auf, der flächig und stoffschlüssig mit einem Flächenabschnitt eines Außenmantels des Profilteiles verbunden ist.
2.3. Einsatz für Personenkraftwagen.

## Beschreibung

Die Erfindung betrifft eine Schutzvorrichtung für einen Fahrzeuginnenraum mit einem flexiblen Flächengebilde, das zwischen einer kompakt abgelegten Ruheposition und einer ausgezogenen Funktionsposition beweglich angeordnet und das endseitig quer zur Ausziehrichtung über seine Breite mit einem formstabilen Profilteil verbunden ist.

Aus der WO 00/05479 A1 ist ein flexibles Flächengebilde bekannt, das auf einer Wickelwelle befestigbar ist. Die Wickelwelle weist zur Befestigung des flexiblen Flächengebildes an ihrem Außenumfang eine in Längsrichtung der Wickelwelle über deren gesamten Länge verlaufende Nut auf, in die ein heißschmelzender Klebstoff raupenförmig eingebracht ist. Die Klebstoffraupe ragt über den Außenumfang der Wickelwelle geringfügig ab. Das flexible Flächengebilde wird über die gesamte Breite der Wickelwelle auf diese aufgebracht und mittels eines Bügeleisens so erhitzt, dass die Klebstoffraupe an der Unterseite des flexiblen Flächengebildes über deren Breite anschmilzt. Im festen Zustand bildet die Klebstoffraupe eine Art Keder, die in die Längsnut der Wickelwelle von einer Stirnseite der Wickelwelle her eingezogen oder aus dieser entfernt werden kann.

Aufgabe der Erfindung ist es, eine Schutzvorrichtung der eingangs genannten Art zu schaffen, die mit einfachen Mitteln eine zuverlässige Fixierung des Flächengebildes auf dem formstabilen Profilteil ermöglicht.

Diese Aufgabe wird dadurch gelöst, dass das Flächengebilde einen über seine Breite erstreckten Flächenabschnitt aufweist, der flächig und stoffschlüssig mit einem Flächenabschnitt eines Außenmantels des Profilteiles verbunden ist. Durch die erfindungsgemäße Lösung ist es möglich, das Profilteil über seinen gesamten Außenmantel glattflächig zu gestalten, ohne dass eine Aufnahmenut oder ähnliches vorhanden sein muss. In besonders bevorzugter Weise ist das Profilteil als hohl- oder vollzylindrische Welle ausgeführt. Auf eine solche Welle kann das Flächengebilde aufgewickelt werden. Alternativ ist es möglich, das Flächengebilde an einem Profilteil in Form eines Kassettengehäuses flächig und stoffschlüssig zu befestigen. Bei einer solchen Ausführungsform wird das Flächengebilde außenseitig flächig an den Außenmantel des Kassettengehäuses angebracht. Die erfindungsgemäße Lösung ist insbesondere für Schutzvorrichtungen in Form von Laderaumabdeckungen und/oder Laderaumtrennnetzen vorgesehen. Es ist aber auch möglich, die erfindungsgemäße Lösung für Sonnenschutzrollos vorzusehen, die im Bereich von Fahrzeugscheiben angeordnet sind, um den Fahrzeuginnenraum gegen starke Sonneneinstrahlung von außen zu schützen. Das flexible Flächengebilde kann auf einer.Wickelwelle auf- und abwickelbar angeordnet sein, so dass die kompakt abgelegte Ruheposition die aufgewickelte Position des Flächengebildes darstellt. Alternativ ist es möglich, das Flächengebilde in seiner kompakt abgelegten Ruheposition in ein- oder mehrfach geschlaufter Faltung zusammenzulegen. Die ausgezogene Funktionsposition stellt bei allen Ausführungsformen eine aufgespannte oder flächig ausgebreitete Position des Flächengebildes dar. Als stoffschlüssige Verbindung des Flächengebildes mit dem Außenmantel des Profilteiles ist vorzugsweise eine Verschweißung vorgesehen. Alternativ ist es möglich, die stoffschlüssige Verbindung durch einen flüssigen Klebstoff herzustellen, der flächig über die entsprechenden Flächenabschnitte verteilt ist und nach dem Aufbringen des entsprechenden Flächenabschnittes des Flächengebildes auf den korrespondierenden Flächenabschnitt des Profilteiles vorzugsweise bei Raumtemperatur aushärtet. Die durch die Flächenabschnitte geschaffene Verbindungsfläche ist so groß bemessen, dass Zug- oder Zugdehnungskräfte, die in ausgezogener Funktionsposition des Flächengebildes auf das Flächengebilde wirken, kein Lösen der stoffschlüssigen Verbindung zulassen. Hierdurch ist gewährleistet, dass eine Ausführung der Schutzvorrichtung als Laderaumabdeckung auch Ladegut, das von unten her gegen das aufgespannte Flächengebilde bei einem Fahrzeugaufprall oder einer anders gearteten starken Verzögerung prallt, zurückhält und nicht zu einem Abreißen des Flächengebildes im Bereich der stoffschlüssigen Verbindung mit dem Profilteil führt.

Als Flächengebilde sind zum einen insbesondere Abdeckgebilde vorgesehen, die als Laderaumabdeckung dienen können. Zum anderen können die Flächengebilde als etwa vertikal aufspannbare Trennnetze ausgeführt sein. Schließlich ist es auch möglich, Flächengebilde vorzusehen, die lediglich einen Teilbereich einer Breite des Fahrzeuginnenraumes abdecken und zwischen einem Kassettengehäuse einer Laderaumabdeckung und einem beweglichen Teil einer Fondsitzbank erstreckt sind.

In Ausgestaltung der Erfindung sind sowohl das Flächengebilde als auch das Profilteil wenigstens im Bereich der miteinander verbundenen Flächenabschnitte jeweils mit einer schweißfähigen Kunststoffoberfläche versehen. Die Kunststoffoberfläche kann lediglich abschnittsweise oder ganzflächig über den Außenmantel des Profilteiles ausgebildet sein. Die Kunststoffoberfläche kann durch eine Beschichtung oder auch durch Ausführung des Flächengebildes und/oder des Profilteiles vollständig aus Kunststoff gebildet sein. Das Flächengebilde selbst kann entweder direkt aus einer schweißfähigen Kunststofffolie hergestellt sein, oder das Flächengebilde ist aus einem Textilmaterial hergestellt und lediglich im Bereich des Flächenabschnittes entsprechend kunststoffbeschichtet. Auch das Profilteil kann entweder zumindest abschnittsweise mit einer Oberflächenschicht aus einem schweißfähigen Kunststoff gestaltet und im übrigen aus Metall oder einem anderen Material hergestellt sein, oder es ist insgesamt aus einem schweißfähigen Kunststoffmaterial hergestellt.

In weiterer Ausgestaltung der Erfindung ist das Profilteil wenigstens in dem Verbindungsbereich mit einem schweißfähigen Kunststoff, insbesondere PVC, kaschiert. Vorzugsweise ist das Profilteil selbst aus Metall, insbesondere einem Aluminiumstrangpressprofil, hergestellt. Diese Ausführungsform eignet sich vorzugsweise für die Ausgestaltung des Profilteiles als Kassettengehäuse einer Laderaumabdeckung und/oder eines Laderaumtrennnetzes.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt ist.
- Fig. 1: zeigt in schematischer, perspektivischer Darstellung einen Ausschnitt eines Fahrzeuginnenraumes eines Personenkraftwagens mit einer Ausführungsform einer erfindungsgemäßen Schutzvorrichtung,
- Fig. 2: in vergrößerter Schnittdarstellung eine Wickelwelle der Schutzvorrichtung nach Fig. 1 mit angeschweißtem Flächengebilde und
- Fig. 3: eine weitere Ausführungsform einer Schutzvorrichtung ähnlich Fig. 1 in schematischer, perspektivischer Schnittdarstellung.

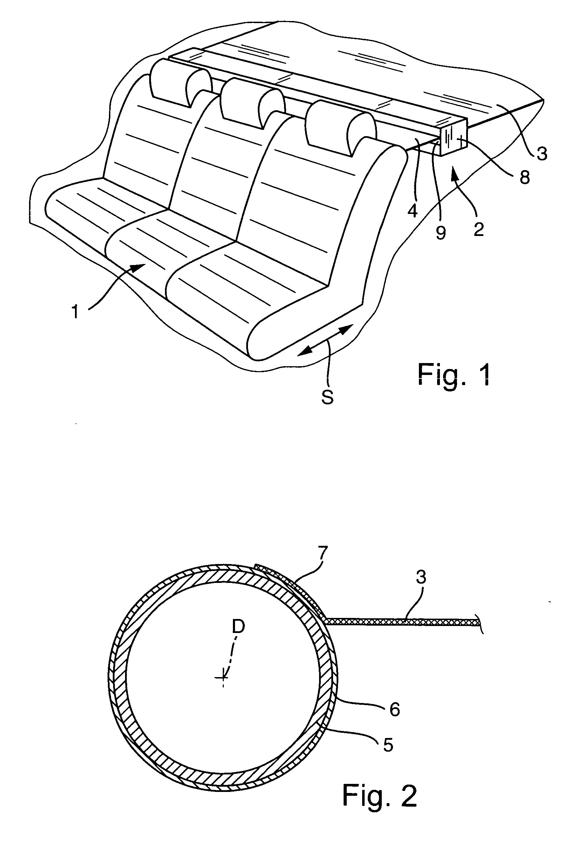

Ein Personenkraftwagen in Form eines Kombi-Personenkraftwagens oder in Form einer Großraumlimousine weist einen Fahrzeuginnenraum auf, der gemäß Fig. 1 mit einer mehrteiligen Fondsitzbank 1 ausgestattet ist. Wie anhand des Pfeiles S in Fig. 1 schematisch verdeutlicht ist, ist die Fondsitzbank 1 in Fahrzeuglängsrichtung verlagerbar angeordnet. Dadurch ist es möglich, die Fondsitzbank 1 in unterschiedlichen Positionen innerhalb des Fahrzeuginnenraumes anzuordnen und so - je nach Bedarf - einen Laderaum oder einen Fahrgastraum des Fahrzeuginnenraums entsprechend zu vergrößern oder zu verkleinern.

Hinter der Fondsitzbank ist eine Schutzvorrichtung 2 angeordnet, die ein Kassettengehäuse 8 aufweist, in der eine Laderaumabdeckung vorgesehen ist, die mit einem flexiblen Flächengebilde 3 versehen ist. Das flexible Flächengebilde 3 ist gemäß Fig. 2 auf einer um eine Drehachse D in dem Kassettengehäuse 8 gelagerten Wickelwelle 5 auf- und abwickelbar gehalten. In einer aufgewickelten Position ist das Flächengebilde 3 in dem Kassettengehäuse 8 untergebracht. Das Flächengebilde 3 wird durch einen nicht näher dargestellten Ausziehschlitz an einer Rückseite des Kassettengehäuses 8 ausgezogen und in einer aufgespannten Funktionsposition (in Fig. 1 dargestellt) in fahrzeugfesten Halterungen in einem Heckbereich des Laderaumes lösbar befestigt. Das Kassettengehäuse 8 ist fahrzeugseitig im Fahrzeuginnenraum befestigt. An dem Kassettengehäuse 8 ist ein weiteres, kurzes, flexibles Flächengebilde 4 angeordnet, das sich ausgehend vom Kassettengehäuse 8 zu einer Rückenlehnenanordnung der Fondsitzbank 1 nach vorne erstreckt und mit seinem vorderen Stirnendbereich an der Rückenlehnenanordnung der Fondsitzbank 1 lösbar befestigt ist. Dieses Flächengebilde 4 dient als Abdeckung für einen Zwischenraum zwischen dem fahrzeugfest angeordneten Kassettengehäuse 8 und der verlagerbar angeordneten Fondsitzbank 1, falls die Fondsitzbank 1 in ihre vordere Endposition überführt ist. In dieser vorderen Endposition der Fondsitzbank 1 ist das Flächengebilde 4 in einem straffen, etwa horizontal aufgespannten Funktionszustand.

Um das kurze Flächengebilde 4, das sich - wie das Flächengebilde 3 - über nahezu die gesamte Länge des Kassettengehäuses 8 und damit über nahezu die gesamte Breite des Fahrzeuginnenraumes erstreckt, an dem Kassettengehäuse 8 befestigen zu können, ist das Kassettengehäuse 8 wenigstens in einem der Fondsitzbank 1 zugewandten Längsseitenbereich seines Außenmantels mit einem schweißfähigen Kunststoff beschichtet. Die beschichtete Fläche entspricht vorzugsweise der Gesamtfläche der Längsseite des Kassettengehäuses 8, das einen rechteckigen Querschnitt aufweist. Alternativ kann der gesamte Außenmantel des Kassettengehäuses 8 mit einer entsprechenden Beschichtung versehen sein. Schließlich ist es auch möglich, lediglich einen - verglichen mit der Höhe der Längsseite des Kassettengehäuses 8 - schmalen Längsstreifen über seine Länge durchgängig mit einer schweißfähigen Kunststoffschicht zu beschichten. Die Breite dieses Längsstreifens ist vorzugsweise wenigstens so groß bemessen, dass ein anzuschweißender Flächenstreifen 9 des Flächengebildes 4 vollständig flächig mit diesem Längsstreifen verschweißt werden kann. Das Flächengebilde 4 ist mit dem Flächenstreifen 9 versehen, der einen stirnseitigen Flächenbereich des Flächengebildes 4 bildet und sich über die gesamte Breite des Flächengebildes 4 erstreckt. Das Flächengebilde 4 ist aus einem Folienmaterial aus Kunststoff, vorzugsweise aus PVC, hergestellt. Bei einer anderen Ausführungsform ist das Flächengebilde aus einem Textilmaterial hergestellt, das wenigstens einseitig, vorzugsweise beidseitig, mit Kunststoff beschichtet ist.

Die Wahl der Kunststoffmaterialien für das Flächengebilde 4 einerseits und die Beschichtung des Kassettengehäuses 8 andererseits ist so gewählt, dass die entsprechenden Kunststoffe miteinander verschweißt werden können. Vorzugsweise ist das Flächengebilde 4 aus einer PVC-Folie hergestellt. Die Beschichtung des Kassettengehäuses 8 erfolgt vorzugsweise durch eine Kaschierung mit PVC-Material. Das Flächengebilde 4 wird entlang seiner Längsstreifen 9 flächig mit dem Kassettengehäuse 8 verschweißt, wobei die Schweißfläche parallel zur Längskante des Kassettengehäuses 8 verläuft, um einen optisch ansprechenden Eindruck für das angeschweißte Flächengebilde 4 zu gewährleisten. Es ist auch möglich, anstelle eines einzelnen, durchgängigen Flächengebildes 4, mehrere Flächengebildeabschnitte vorzusehen, die über die Fahrzeugbreite aneinander grenzen, aber unabhängig voneinander aufgespannt oder zusammengefaltet werden können. Eine solche Ausführungsform ist vorteilhaft, falls die Fondsitzbank 1 aus wenigstens zwei unabhängig voneinander längsbeweglichen Fondsitzteilen besteht. Die Breite des jeweiligen Flächengebildeabschnittes ist auf die Breite der Rückenlehne des jeweiligen Fondsitzteiles abgestimmt, um gemeinsam mit der Bewegung der entsprechenden Fondsitzteiles aufgespannt oder zusammengefaltet zu werden.

Das Flächengebilde 3 ist mittels eines stirnseitigen und über die gesamte Breite durchgängigen Flächenabschnittes 7 mit einem Außenumfang der Wickelwelle 5 verschweißt (Fig. 2). Hierzu ist die Wickelwelle 5, die vorzugsweise aus Metall besteht, an ihrem Außenumfang durchgängig und flächig mit einer Mantelbeschichtung 6 aus einem schweißfähigen Kunststoffmaterial, vorzugsweise aus PVC, versehen. Das Aufbringen der PVC-Schicht erfolgt vorzugsweise durch Kaschieren. Das Flächengebilde 3 ist aus einer Kunststofffolie, vorzugsweise einer PVC-Folie, hergestellt. Bei einer anderen Ausführungsform ist das Flächengebilde 3 aus einem Textilmaterial hergestellt, das wenigstens einseitig mit einem schweißfähigen Kunststoff, insbesondere PVC, beschichtet ist. Wie auch bei dem Flächengebilde 4 ist der Flächenabschnitt 7 durch eine Falzung von dem übrigen Flächengebilde 3 abgegrenzt. Der Falz läuft parallel zur Drehachse D in Längsrichtung der Wickelwelle 5. Durch Verschweißung ist der Flächenabschnitt 7 vollständig und flächig mit einem entsprechenden Umfangsabschnitt der Wickelwelle 5 verschweißt, indem die Kunststoffbeschichtung 6 am Außenmantel der Wickelwelle 5 entsprechend aufgeschmolzen wurde.

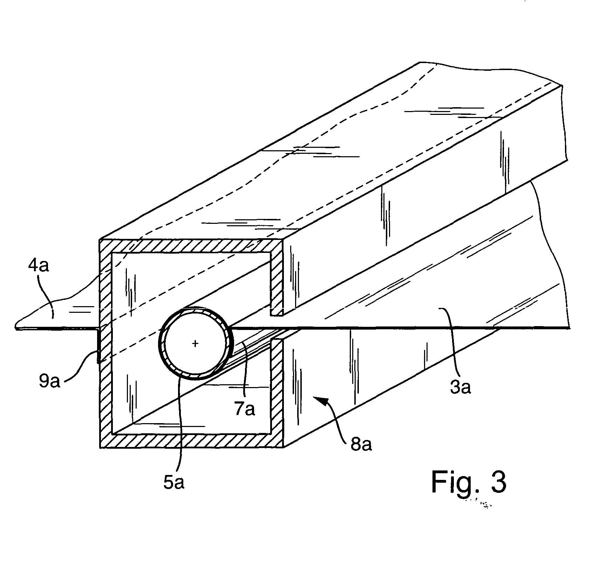

Die Ausführungsform gemäß Fig. 3 entspricht im wesentlichen der anhand der Fig. 1 und 2 beschriebenen Ausführungsform. Funktionsgleiche Teile und Abschnitte sind mit gleichen Bezugszeichen unter Hinzufügung des Buchstabens a versehen. Einziger Unterschied bei der Ausführungsform nach Fig. 3 ist es, dass der Flächenabschnitt 7a an dem Flächengebilde 3 in entgegengesetztem Drehsinn umgefalzt ist, so dass er von dem Flächengebilde 3 aus im angeschweißten Zustand nach unten ragt. Bei der Ausführungsform gemäß Fig. 2 hingegen war der Flächengebildeabschnitt 7 nach oben umgefalzt worden, so dass der angeschweißte Flächengebildeabschnitt 7 gemäß Fig. 2 oberhalb des nach hinten abragenden Flächengebildes 3 an der Wickelwelle 5 positioniert ist. Wesentlich für die Wahl der Kunststoffmaterialien sowohl bei dem jeweiligen Flächengebilde als auch bei dem mit dem Flächengebilde zu verbindenden Profilteil ist es, dass die Kunststoffmaterialien der jeweiligen Verbindungspartner von ihren physikalischen und chemischen Eigenschaften her so gewählt sind, dass sie miteinander verschweißt werden können.

## Patentansprüche

1. Schutzvorrichtung für einen Fahrzeuginnenraum mit einem flexiblen Flächengebilde, das zwischen einer kompakt abgelegten Ruheposition und einer ausgezogenen Funktionsposition beweglich angeordnet und das endseitig quer zur Ausziehrichtung über seine Breite mit einem formstabilen Profilteil verbunden ist, **dadurch gekennzeichnet, dass** das Flächengebilde (3, 3a; 4, 4a) einen über seine Breite erstreckten Flächenabschnitt (7, 7a; 9, 9a) aufweist, der flächig und stoffschlüssig mit einem Flächenabschnitt eines Außenmantels des Profilteiles (5, 5a; 8, 8a) verbunden ist.

2. Schutzvorrichtung nach Anspruch 1, **dadurch gekennzeichnet, dass** sowohl das Flächengebilde (3, 3a; 4, 4a) als auch das Profilteil (5, 5a; 8, 8a) wenigstens im Bereich der miteinander verbundenen Flächenabschnitte jeweils mit einer schweißfähigen Kunststoffoberfläche (6) versehen sind.

3. Schutzvorrichtung nach Anspruch 1, **dadurch gekennzeichnet, dass** das Profilteil (5, 5a; 8, 8a) wenigstens im Verbindungsbereich mit einem schweißfähigen Kunststoff, insbesondere PVC, kaschiert ist.

4. Schutzvorrichtung nach Anspruch 1, **dadurch gekennzeichnet, dass** das Flächengebilde (3, 3a; 4, 4a) aus einem Folienmaterial aus schweißfähigem Kunststoff, insbesondere aus PVC, besteht.
